# EUROPÄISCHE PATENTSCHRIFT

(11) **EP 2 474 987 B1**
(45) Veröffentlichungstag und Bekanntmachung des Hinweises auf die Patenterteilung: **29.05.2013**
(21) Anmeldenummer: 11150214.2
(22) Anmeldetag: 05.01.2011
(51) Int. Cl.: H01H 3/12, H01H 13/06, H02B 1/044, H01H 13/02

(54) **Einbauschalter**
Built-in switch
Interrupteur encastré

(43) Veröffentlichungstag der Anmeldung: 11.07.2012
(73) Patentinhaber: EAO Holding AG, 4601 Olten (CH)
(72) Erfinder: Furrer, Daniel EAO Holding AG, 4652 Winznau (CH)
(74) Vertreter: Liebetanz, Michael

(56) Entgegenhaltungen:
- EP-A2- 0 749 136
- FR-A1- 2 931 584

## Beschreibung

### TECHNISCHES GEBIET

Die vorliegende Erfindung betrifft einen Einbauschalter, insbesondere einen Türöffnerschalter, zur Montage auf einer Befestigungsfläche mit einem, aus der Benutzungsrichtung des Türöffnerschalters gesehen, über den Deckel überstehenden Flansch mit einer axial beweglichen Taste zur Betätigung eines mit dem Gehäuse verbundenen Schaltorgans, wobei die Taste durch eine Rückstellkraft in ihrer Ruhelage gehalten und gegen die Wirkung dieser Rückstellkraft eindrückbar ist.

### STAND DER TECHNIK

Ein solcher Einbauschalter als Türöffnerschalter mit den Merkmalen des Oberbegriffs des Anspruchs 1 ist aus der EP 0 749 136 der Anmelderin bekannt, der die Vorteile eines elektronischen Schalters mit einem kleinen Schaltweg mit den Vorteilen eines mechanischen Schalters, insbesondere dessen Robustheit verbindet.

Ein weiterer solcher Schalter ist aus der EP 1 245 033 bekannt, welche einen Türöffnerschalter mit einer grossflächigen Druckhaube mit kleinem Schaltweg zeigt. Für den Bedienungskomfort und die Zulassung als Schalter insbesondere im Öffentlichen Verkehr ist es häufig notwendig, solche Schalter mit Beleuchtungselementen auszustatten, die die Freischaltung für eine Auslösung wie auch die Auslösung selber optisch anzeigen können, wobei sich diese optischen Anzeigen für Freischaltung und für Auslösung unterscheiden sollen.

### DARSTELLUNG DER ERFINDUNG

Ausgehend von diesem Stand der Technik ist es eine Aufgabe der vorliegenden Erfindung, einen solchen bekannten Einbauschalter, insbesondere einen Türöffnerschalter, mit einer möglichst grossen Druckhaube auszugestalten. Dabei ist unter Druckhaube die Auslösefläche zu verstehen, das heisst die Fläche des Schalters, auf den ein Druck zu einer Auslösung der Funktion führt.

Dabei ist es eine weitere Aufgabe der Erfindung, die Druckhaube trotz ihrer Grösse so zu gestalten, dass ein Druck auf einen beliebigen Teilbereich zu einer sicheren Auslösung der Funktion führt; also insbesondere, dass bei einer kreisrunden Druckhaube auch ein Drücken derselben in einem Bereich nahe des Kreisrandes zu einem sicheren Auslösen führt und nicht nur ein Drücken auf den zentralen Bereich.

Nachteilig beim Stand der Technik ist ferner, dass die Grösse der Druckhaube durch einen überstehenden Befestigungsring begrenzt ist, der dafür vorgesehen ist, den eingesetzten Schalter abzudecken und dort insbesondere dessen Befestigungsschrauben, die neben der Auslösefläche der Druckhaube den Schalter mit einem Paneel verbinden.

Es ist auch eine Aufgabe der Erfindung, einen flacheren Schalter anzugeben, der sicher auslöst und der für den Ausseneinsatz geeignet ist, also vorzugsweise wasserdicht, insbesondere spritzwasserdicht und dabei gesichert in Bezug auf den Einsatz von Hochdruckreinigern (IP69K).

Dadurch, dass der Schalter eine Druckhaube aufweist, die nahezu den kompletten Querschnitt von oben gesehen ausfüllt, kann nahezu die vollständige Baubreite dieser Taste als Auslösefläche benutzt werden. Zu der Taste gehört ein Befestigungsring, der zuerst mit entsprechend vorgesehenen Befestigungselementen, insbesondere Schrauben, an einem Paneel befestigbar ist. Durch die an diesem Befestigungsring vorgesehenen Bajonettschultern ist es möglich, nach dem Aufsetzen der zuvor zusammengebauten Türöffnerschalter diesen auf dem Paneel zu verriegeln, indem ein Supportring auf die Einheit von Befestigungsring und Tastereinheit gesetzt wird, welcher sich durch komplementäre Bajonettschultern sicher mit dem Befestigungsring verrastet. Dabei weist der Supportring auf der Innenseite eine Verriegelungsnase auf, die ein ungewolltes Lösen des Supportringes verhindert. Damit deckt die Auslösefläche der Taste die Befestigungselemente an dem Paneel ab und weist somit eine grössere Fläche als seine eigene Befestigungsgrundfläche auf.

Eine weitere Aufgabe der vorliegenden Erfindung ist die erhöhte Modularität des Türöffnerschalters. Diese wird dadurch erreicht, dass der Schalter eine steckbare Kabelverbindung aufweist.

Ein weiteres Ziel der Erfindung ist es, einen sicher auslösenden Schalter mit sehr geringer Bauhöhe und grossflächiger Druckhaube anzugeben. Eine solche grossflächige Druckhaube geringer Bauhöhe weist das Problem auf, dass bei einer im Ausseneinsatz vorteilhafterweise dichten Ausführung ein Verdrängungsproblem des durch das Niederdrücken der Taste zu verdrängenden Luftpolsters ergibt. Diese Aufgabe wird erfindungsgemäss dadurch gelöst, dass eine axial bewegliche Kunststoffmembrane im Deckel vorgesehen ist, die sich gegenüber dem Gehäuse verschieben kann und somit eine Bewegung der Luftsäule innerhalb des geschlossenen Schalters ermöglicht.

Diese Merkmale können in Alleinstellung oder in Kombination eingesetzt werden. Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine Explosionsansicht mit den wesentlichen Elementen des montierfähigen Türöffnerschalters gemäss einem Ausführungsbeispiel der Erfindung vor einem Paneel,
- Fig. 2: die Taste des Türöffnerschalters nach Fig. 1 in einer Explosionsansicht in seinen Einzelteilen vor Montage,
- Fig. 3: eine Querschnittsansicht durch den Türöffnerschalter nach Fig. 1 inklusive Befestigungselementen aber ohne Paneel,
- Fig. 4: eine Ansicht von unten der Schaltmatte des Türöffnerschalters,
- Fig. 5: eine Ansicht von unten des Türöffnerschalters mit dem Befestigungsring,
- Fig. 6: eine perspektivische Ansicht von oben auf den Deckel eines Türöffnerschalters gemäss einem weiteren Ausführungsbeispiel der Erfindung, und
- Fig. 7: eine Querschnittsansicht durch den zusammengesetzten Türöffnerschalter nach Fig. 6.

### BESCHREIBUNG BEVORZUGTER AUSFÜHRUNGSFORMEN

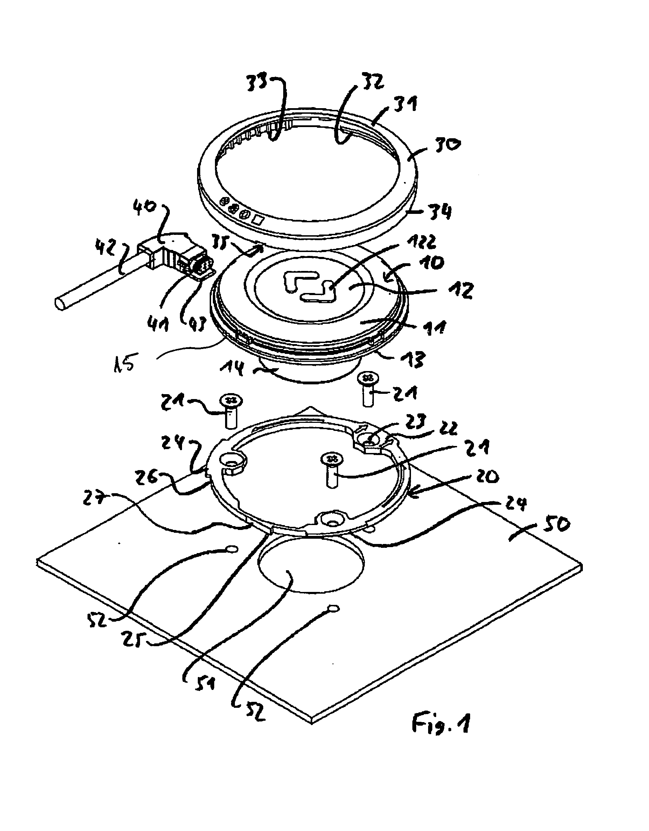

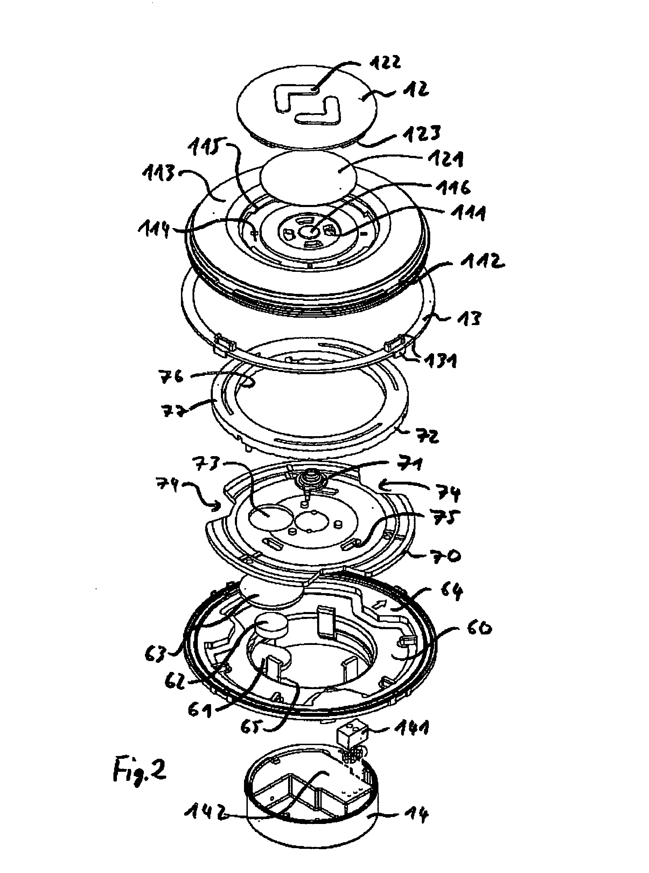

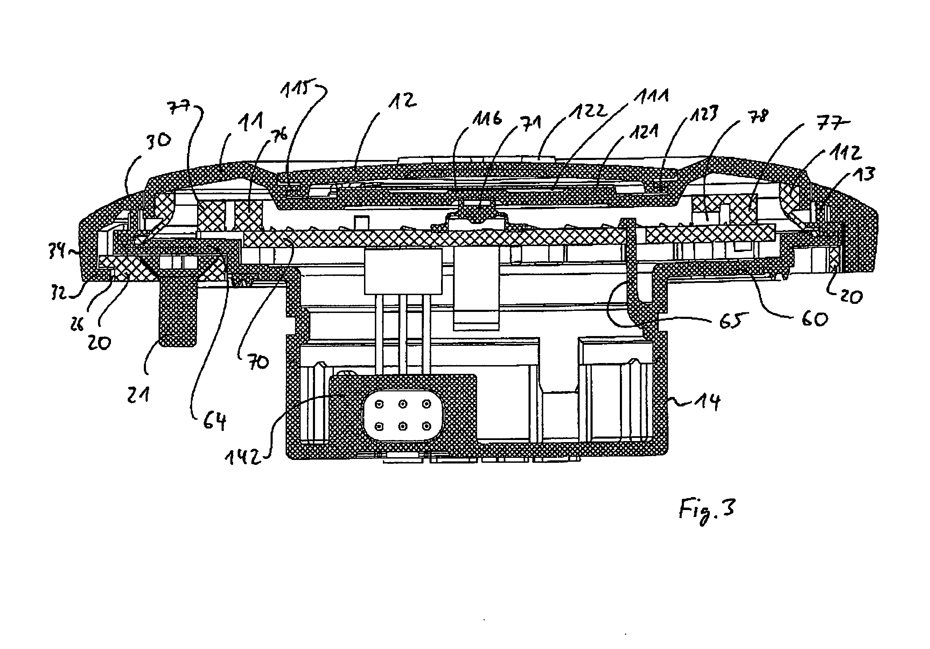

Fig. 1 zeigt in schematischer Weise eine Explosionsansicht eines montierfähigen Einbauschalters in Gestalt eines Türöffnerschalters gemäss einem Ausführungsbeispiel der Erfindung vor einem Paneel 50, an dem er montiert werden soll, und mit einem Stecker 40 für den elektrischen Anschluss. Der Türöffnerschalter verfügt nun über drei Baugruppen, die die Bezugszeichen 10, 20 und 30 erhalten haben und die nachfolgend beschrieben werden. Fig. 2 zeigt eine Explosionsansicht des Türöffnerschalters nach Fig. 1 mit den die Baugruppen aufbauenden Einzelelementen. Fig. 3, auf die in diesem Zusammenhang auch schon verwiesen wird, zeigt schliesslich eine Querschnittsansicht des Türöffnerschalters im zusammengebauten Zustand, mit Befestigungsschrauben 21, aber ohne das Paneel 50 oder den Stecker 40. Neben dem Öffnen von Türen kann ein solcher Einbauschalter auch zu einer Vielzahl von anderen Schaltfunktionen eingesetzt werden, wie dem Anfordern von Lichtsignalen, Aufzügen und anderen Aufgaben, bei denen eine grosse Betätigungsfläche sinnvoll ist sowie eine optische Rückmeldung und hohe Vandalensicherheit erwünscht sind.

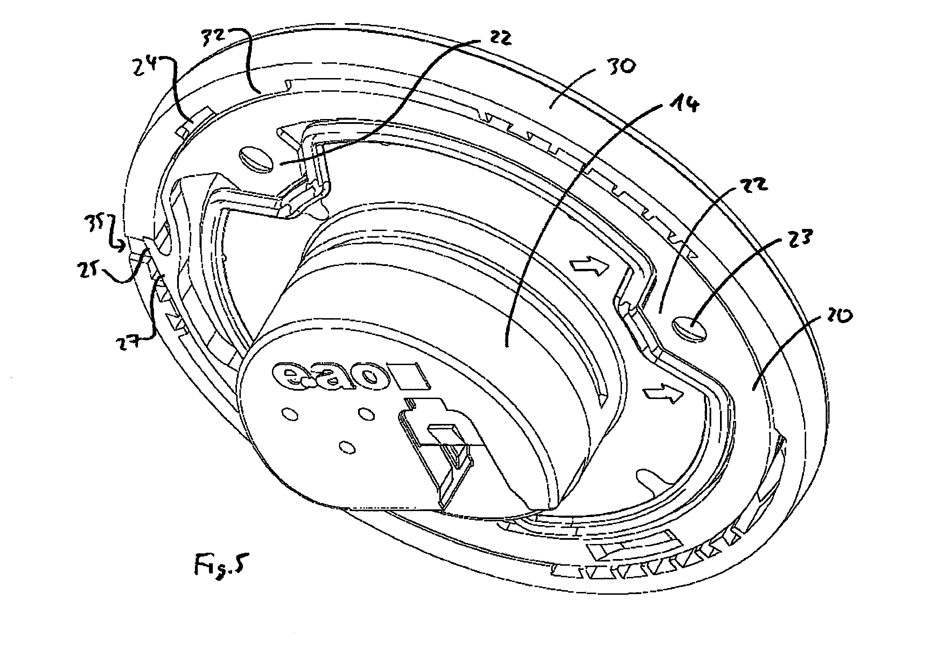

Eine der genannten drei Baugruppen umfasst eine zentrale Taste 10, welche eine Auslöse-Druckhaube 11 umfasst, die die gesamte runde Ausdehnung der Taste 10 ausmacht und ausfüllt. Zentral in der Druckhaube 11 besteht ein versenkter Bereich 114, in dem ein Symboleinsatz 12 einsetzbar ist. Die Druckhaube 11 ist mit einem Schweissring 13 verbunden, insbesondere durch eine Schallschweissung über die Dichtung 112. Nach unten ragt ein Gehäuse 14 aus der Baugruppe heraus, so dass die Taste 10 über einen überstehenden Flanschbereich 15 verfügt. Der Flanschbereich 15 steht, aus der Benutzungsrichtung des Türöffnerschalters gesehen, über den Deckel 14 über. Seine Struktur ergibt sich aus der Fig. 3 und der Fig. 5.

Der Flansch 15 ist dazu vorgesehen und auf seiner Unterseite dafür komplementär ausgestaltet, auf dem Befestigungsring 20 abgesetzt zu werden, der bei einer Montage des Türöffnungsschalters zuvor auf beispielsweise einem Paneel 50 befestigt wird. Das Paneel 50, welches Teil einer Tür sein kann und dann zumeist vertikal ausgerichtet ist, verfügt über eine Gehäuseaufnahme 51, die ein einfaches Durchgangs- oder Sackloch sein kann, für die im wesentlichen passgenaue Aufnahme des Deckels 14 und über eine Anzahl von Schraubenlöchern 52. Hier sind drei Schraubenlöcher 52 vorgesehen, entsprechend drei Schraubenöffnungen 23 im Befestigungsring 20. Die drei angefasten Schraubenöffnungen 23 sind in einem Winkelabstand von 120 Grad zu einander in Orientierungsflanschen 22 auf dem Befestigungsring vorgesehen. Prinzipiell wäre es auch möglich, den Befestigungsring 20 in radialer Richtung im Material stärker auszuführen, sofern nur mindestens ein Orientierungselement besteht, welches die Taste 10 verdrehsicher zum Befestigungsring 20 hält. Wie im Zusammenhang mit der Fig. 2 zu erkennen ist, bestehen dort an den Orten der Befestigungsorientierungsflansche 22 entsprechende trapezförmige Befestigungsausnehmungen 64, so dass die Taste 10 verdrehsicher auf dem Befestigungsring 20 eingesetzt wird. Insofern ist es wesentlich, dass der Befestigungsring 20 nicht, radial gesehen, eine gleichförmige Innenausgestaltung aufweist. Diese ist hier durch die Aufnahmen 22 der Schraubenöffnungen 23 erreicht. Das Orientierungselement kann auch durch einen nicht-runden Deckel 14 gegeben sein, der in eine dann komplementäre Aufnahme 51 des Paneels in genau einer oder (z.B. bei Polygonen) in verschiedenen Positionen einsetzbar ist.

Anstelle einer Schraubenverbindung kann der Befestigungsring 20 auch für eine Nietverbindung ausgelegt sein oder er kann im Prinzip auch angeschweisst, angelötet oder angeklebt werden. Wesentlich ist die Ausrichtung des Befestigungsringes 20 für die Ausrichtung des Symbolfeldes 12 über die Befestigungsausnehmungen 64 der Taste 10.

Der Befestigungsring 20 verfügt hier über drei an den Flanschen 22 nach aussen überstehenden Bajonettschultern 24, die nicht die komplette Höhe des Befestigungsringes 20 ausmachen. Mit anderen Worten, unter den überstehenden Bajonettschultern 24 besteht ein unterer Rand 26 bis zur Unterkante des Befestigungsringes 20. Wie bei den Befestigungslöchern 23 selber können diese Bajonettschultern 24 auch in einer anderen Form und Anzahl vorliegen; die Bajonettschultern 24 müssen nicht im selben Winkelabstand und mit der Zahl drei vorliegen; wesentlich ist, dass eine Verriegelung der Taste 10 durch den diese übergreifenden und weiter unten noch zu beschreibenden Supportring 30 möglich ist. Anstelle der Bajonettschultern kann auch eine Schnappverbindung vorgesehen sein, so dass der Befestigungsring 20 aufgeschnappt wird und mit einem Klick einrastet. Bei einer anderen Lösung kann der Befestigungsring 20 auch mit lateral und radial verlaufenden Schrauben befestigt werden.

Der Befestigungsring 20 weist ferner eine nach aussen gerichtete Verriegelungsnase 25 auf, die mit einer im Supportring 30 in der Fig. 1 nicht erkennbaren komplementären Nase in Eingriff bringbar ist. Durch das Drehen des Supportringes 30 entsprechend den auf dem Befestigungsring 20 aufgezeichneten Pfeilen läuft die in dem Supportring 30 vorgesehene innere Nase auf der schrägen Flanke oder Rampe 27 der Verriegelungsnase 25 auf, bis sie in den dahinterliegenden Raum der Ausnahme rutscht und damit den Supportring 30 gegenüber dem Befestigungsring 20 verriegelt. In dem Supportring 30 ist vorteilhafterweise eine seitliche Serviceöffnung 35 vorgesehen, mit der der in dem Bereich der Verriegelungsnase 25 und teilweise der Rampe 27 im Material aufweisenden Durchmesser dünne Befestigungsring 20 zurückstossbar ist, so dass dann der Supportring 30 in entgegengesetzter Richtung der auf dem Befestigungsring 20 aufgezeichneten Pfeilen drehbar und somit lösbar ist.

Der Supportring 30 selber verfügt über eine zylindrische Seitenwand 34, auf deren Aussenseite die besagte Serviceöffnung 35 vorgesehen ist, und zwar genau neben der, von oben gegen den Uhrzeigersinn gesehen, nach innen ragende Nase, die beim zusammengebauten Schalter neben der Auflauframpe 27 und deren Ende, der Nase 25, zu liegen kommt.

Der Supportring 30 ist auf seiner Oberseite mit einem nach innen gerichteten Kragen 31 versehen, welcher sich auf einer komplementären Schulter 16 der Taste 10 abstützt. Die Innenkante des Kragens 31 ragt an den äusseren Rand der Druckhaube 11 heran, insbesondere im nicht gedrückten Zustand der Druckhaube 11.

An der Unterkannte der Seitenwand 34 des Supportrings30 sind hier drei nach innen ragende Bajonettschultern 32 vorgesehen, die mit den komplementären Schultern 24 des Befestigungsringes 20 verschränkbar sind; mit anderen Worten, im durch die Nase 25 verriegelten montierten Zustand des Supportrings 30 liegen die nach innen ragenden Bajonettschultern 32 genau gegenüber dem unteren Rand 26 unterhalb der Bajonettschultern 24. Anzahl und Form dieser Elemente ist daher komplementär ausgelegt.. Die Erhebungen 33 dienen der Zentrierung des Supportringes 30 bei der Montage.

An der Unterseite des Deckels 14 selber ist die in der Fig. 2 ersichtliche Steckeraufnahme 142 vorgesehen, in welche der Stecker 40 einsteckbar ist. Die schnapplasche 43 sichert den Stecker gegen ungewolltes Lösen und damit als Abfallschutz. Für das Lösen der Steckverbindung wird die Lasche 43 angehoben und der Stecker abgezogen. Die elektrischen Kontakte sind dabei im Stecker 40 eingegossen. Ein O-Ring 41 dichtet die Kontaktstelle gegen eindringende Feuchtigkeit ab. Der Stecker 40 ist dann in der üblichen Weise mit einem Kabel 42 verbunden. Damit ist es möglich, die Türöffnerschalter als die genannten Baugruppen ohne einen Pigtail anzuliefern, was die Servicefreundlichkeit erhöht.

Die Fig. 2 zeigt eine etwas detaillierter eine Explosionsansicht des Tasters 10, bevor dieser zusammengebaut ist. Zentrales Element der Taste 10 ist das Gehäuse 60, welches nach innen eine Öffnung hat, in welche von unten der Deckel 14 aufsetzbar ist.

Vorteilhafterweise ist in diesem Innenraum eine eine Konsole bildende Lautsprecherplatte 61 vorgesehen, auf welcher eine Schaumstoffinatte 62 aufsetzbar ist, auf der der Lautsprecher 63 eingesetzt wird. Der Lautsprecher 63 ragt dann durch eine Lautsprecheröffnung 73 in der Leiterplatte 70. Das Gehäuse 60 zeigt in der in Fig. 2 dargestellten Form die nicht ebene Unterseite, die über drei trapezförmige Befestigungsausnehmungen 64 verfügt, die dann zur orientierbaren Verriegelung des Deckels mit dem Befestigungsring 20 vorgesehen sind.

Die Leiterplatte 70 mit einem grossen Durchmesser, der in die Nähe der Grösse der Druckhaube 11 kommt, verfügt über hier drei in einem unregelmässigen Winkelabstand vorgesehene Durchbrüche 75 in einem radialen Abstand, der dem Gehäusedurchmesser entspricht, durch welche die drei komplementären Befestigungsrasten 65 des Deckels 60 hindurchragen, die die Leiterplatte 70 in dem Gehäuse 60 fixieren. Die Winkelabstände könnten auch in anderen Abständen vorgesehen sein, insbesondere auch gleichmässig im Abstand von 120 Grad. Die Leiterplatte 70 ist ansonsten vorzugsweise rund mit drei trapezförmigen Ausnehmungen 74 am Umfang, die komplementär zu den Ausnehmungen 64 des Gehäuses 60 sind. Auf der Leiterplatte 70 ist die elektrische Schaltung in konventioneller Weise, vorzugsweise in SMD Technik, aufgebracht, aber hier nicht dargestellt. Für die Beleuchtung des Türöffnerschalters ist mindestens ein Lichtleiter 72 vorgesehen, der insbesondere auf die Leiterplatte 70 aufsteckbar ist. Bei dem dargestellten Ausführungsbeispiel umfasst er in zwei konzentrischen Abschnitten 76 und 77 jeweils drei einen Winkelabschnitt von 120 Grad abdeckende Leiterabschnitte, die durch in der Fig. 2 nicht erkennbaren LED-Aufnahmen getrennt sind, so dass drei LED's für den äusseren Abschnitt 77 und drei LED's für den inneren Abschnitt 76 vorgesehen sind, die die einzelnen optischen Anzeigen ansteuern.

Die Druckhaube 11 ist vorzugsweise ein durchscheinendes, beispielsweise einem Rauchglas ähnelnden Spritzgussteil in einem 1K- oder 2K-Sprizguss angebrachten weichen Federelement 112, welches nach der Montage über den Schweissring 13 mit dem Gehäuse 60 fix verbunden ist. Durch die 1K- oder 2K-Ausführung des verbundenen Elementes Druckhaube 11 plus axiales Federelement 112 ist eine dichte Verbindung gewährleistet. Die Druckhaube 11 verfügt über einen äusseren erhabenen Kreisring 113, der einen Teil der äusseren Betätigungsfläche ausmacht. Dieser Kreisring 113 ist nach innen angefast, und es schliesst sich daran eine Vertiefung 114 an, welche über hier drei Verriegelungsschultern 115 verfügt, unter denen ein Freiraum besteht. Dabei spielen die Erhebungen 131 auf dem Kreisring 113 eine Rolle für die Orientierung der zu verbindenden Elemente.

Mittig in der Druckhaube 11 sind im dargestellten Ausführungsbeispiel vier trapezförmige Öffnungen 111 vorgesehen, die insbesondere zur besseren Übertragung des durch den Lautsprecher 63 erzeugbaren akustischen Signals vorgesehen sind. Für die Variante ohne Lautsprecher entfallen diese Öffnungen 111; sie können aber auch bei einer Ausführung mit Lautsprecher wegfallen oder es können auch nur drei vorgesehen sein. Zur Abdichtung gegenüber dem Aussenraum des Türöffnerschalters wird eine Membranfolie 121 auf die Vertiefung 114 gelegt und mit dieser beispielsweise schallverschweisst oder verklebt. Ein flacher Symboleinsatz 12 mit einem aufgedruckten oder integriert erhaben oder vertieft vorhandenen Symbol 122 wird in der Vertiefung 114 über die Verriegelungsschulter 115 dadurch verriegelt, dass entsprechende Bajonettelemente 123 an der Unterseite des Symboleinsatzes 12 vorgesehen sind. Mit anderen Worten wird der Symboleinsatz 12 auf die Vertiefung 114 aufgesetzt, so dass die Bajonettschultern 123 zwischen den Bajonettelement 115 angeordnet sind und anschliessend wird der Symboleinsatz 112 um die Längsachse des Tasters 10 gedreht und somit verriegelt.

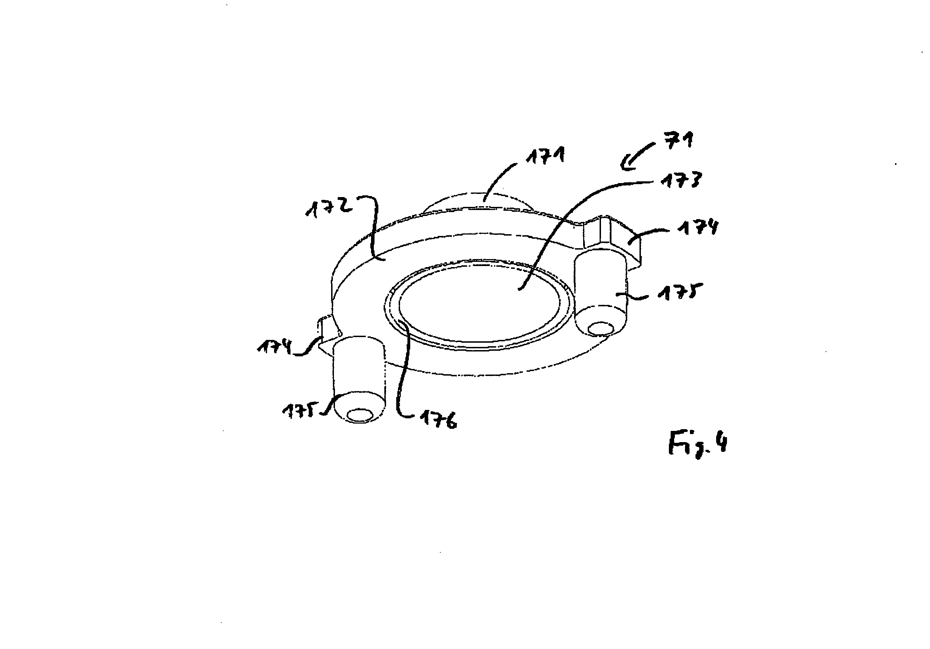

In der Vertiefung 114 ist mittig eine Erhebung als Aufnahme 116 vorgesehen, von der von unten die Schaltmatte 171 mit einem entsprechenden zentrierten Gummielement einsetzbar ist. Die Schaltmatte 71 ist in Fig. 4 genauer dargestellt, die eine eine Ansicht von unten der Schaltmatte 71 des Türöffnerschalters zeigt. Das Material der Schaltmatte 71 ist im wesentlichen flexibles Gummi. Die Schaltmatte 71 hat eine zentrale Schaltmattenerhebung 171, die passgenau in die auf der Unterseite der Aufnahme 116 vorgesehene komplementär Öffnung der Druckhaube 111 passt. Diese Schaltmattenerhebung 171 geht an ihren Rändern in einen Flansch über, der die Grundfläche 172 der Schaltmatte 71 bildet. Seitlich an dieser Grundfläche 172 sind zwei gegenüberliegende seitlicher Ansätze 174 vorgesehen, wobei an der der Schaltmattenerhebung 171 gegenüberliegenden Seite jeweils ein Befestigungsfuss 175 an jedem Ansatz 174 vorzugsweise einstückig ausgeformt ist. Diese Befestigungsfüsse 175 sind dafür vorgesehen, in entsprechende Öffnungen auf der Leiterplatte 70 eingesetzt zu werden. Auf der Leiterplatte ist ein zentrischer erster Kontakt und ein vorzugsweise kreisförmig um diesen ersten Kontakt in einem Abstand mit Isolierabstand angeordneter zweite Kontakt vorgesehen, wobei bei Verbindung der beiden Kontakte der Schalter ausgelöst wird. Dafür ist in der Schaltmatte 71 eine zentrale Ausnehmung 176 vorgesehen worden, die eine mittige elektrisch leitende Metallplatte 173 aufweist, die die leitende Schaltfläche bildet. Durch einen Druck an irgendeiner Stelle der Druckhaube 111 wird die zentrale Schaltmattenerhebung 171 niedergedrückt, diese bewirkt ein Umschnappen der leitenden Schaltfläche 173 in der Ausnehmung 176 und führt damit zur Schliessung des Kontakts.

Durch die erfindungsgemässe Verwendung des Befestigungsringes 20 wird erreicht, dass die Befestigung des Türöffnerschalters mittels der notwendigen Schrauben 21 innerhalb des Durchmessers der Druckhaube 11 und damit unterhalb der Auslösescheibe der Taste 10 und damit unter der Taste 10 möglich ist. Damit ergibt sich die Möglichkeit, bei gleichgrossem Auslösedurchmesser einen kleineren Schalter zu bauen, oder bei einem gleichgrossen Schalter eine grössere Auslösefläche zu erreichen. Durch die Anordnung der Druckhaube 11 aus Rauchglas, kann deren Betätigungsfläche direkt auch als lichtdurchscheinende Fläche benutzt werden.

Durch die Vertiefung 114 in der Druckhaube 11 mit dem Einsatz 12 ist es möglich, eine bessere Führung des Benutzers zu erreichen. Obwohl die Auslösung des Schalters an jeglichem Punkt der Druckhaube 11 möglich ist, da zentral über die Schaltmatte 71 ausgelöst wird, wird er doch durch die Vertiefung einfacher in eine haptische Bestätigung seiner Betätigung geführt.

Problematisch bei dem Schalter nach dieser Auslegung ist der Druckausgleich, da durch die breite Auslösefläche selbst bei geringem Schaltweg eine erhebliche Luftverdrängung stattfindet, die bei dem nun dichten Schalter nicht entweichen kann. Ein aus dem Stand der Technik bekanntes, durch einen Schaumstoff permeabel verschlossenes Gehäuse ist für den Druckausgleich über längere Zeit, also bei einem Türöffnerschalter bei einer Hochgebirgsbahn, die durch verschiedene Höhenregionen fährt und dort eingesetzt wird, möglich, dieses Element ist jedoch nicht geeignet, um den Druckausgleich bei einer Tastenauslösung zu gewährleisten, da hier der Ausgleich schnell, also innerhalb von wenigen Millisekunden stattfinden muss.

Daher ist erfindungsgemäss gemäss Fig. 5 der Druckausgleich in den Deckel 14 integriert, da sich die durch die Bewegung der Druckhaube 11 verdrängte Luft beim Schalten direkt innerhalb des Deckels 14 ausdehnen und verteilen kann und somit den Druckausgleich gegenüber aussen gewährleistet wird.

Die Fig. 5 zeigt eine Ansicht von unten des Türöffnerschalters mit dem Befestigungsring 20 und mit Gehäuse 14. Ebenfalls der Supportring 30 ist schon auf den Taster 10 aufgesetzt, so dass die Verrieglung von dieser direkt erkennbar ist. Die Nase 25 ist an einer vorstehenden Bajonettschulter 32 anstehend, und kann durch einen Druck auf die Serviceöffnung 35 gelöst werden. Die Bajonettschultern 32 am Umkreis des Supportringes 30 greifen über die komplementär angeordneten Bajonettschultern 24 des Befestigungringes 20. Bei einer Montage auf einem Paneel 50 würden dann durch die Öffnungen 23 die Befestigungsschrauben in das Paneel ragen.

Der Lichtleiter 72 besteht aus zwei durch einen teilweise ausgeführten Einschnitt getrennten Ringen 76 und 77, wobei der Lichtleiter 72 in bekannter Art und Weise durch radial vorgesehene Einschnitte unterbrochen wird; diese liefern sogenannte Hotspots, an denen das durch die seitwärts strahlenden LEDs eingespeiste Licht aus dem Lichtleiter 72 in axialer Richtung des Türöffnerschalters, insbesondere durch die Druckhaube 11 entweichen kann und durch das Rauchglas gestreut für den Benutzer klar erkennbar ist, unabhängig von den äusseren Lichtverhältnissen. Durch die Rauchglaseinfärbung der Druckhaube wird ausserdem der Kontrast der Beleuchtung erhöht, was die Erkennbarkeit der Beleuchtung bei Sonneneinstrahlung verbessert.

In der Fig. 3 sind die beiden inneren 76 und äusseren 77 Lichtleiter erkennbar, wobei mit dem Bezugszeichen 78 der Platz einer LED versehen ist.

Die Stiftleiste 141 stellt die elektrische Verbindung zwischen Deckel 14 und Leiterplatte 70 her.

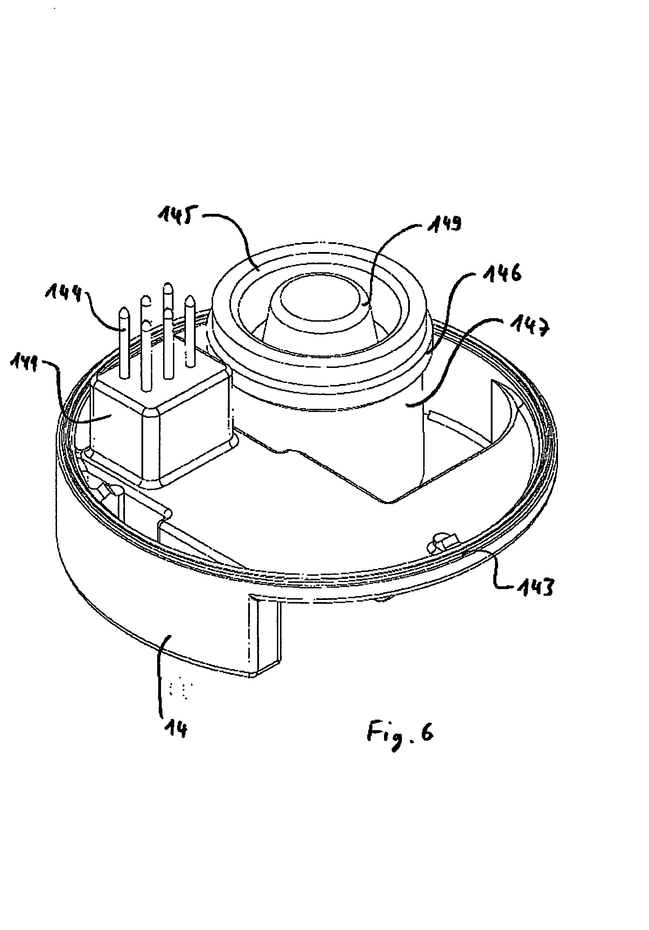

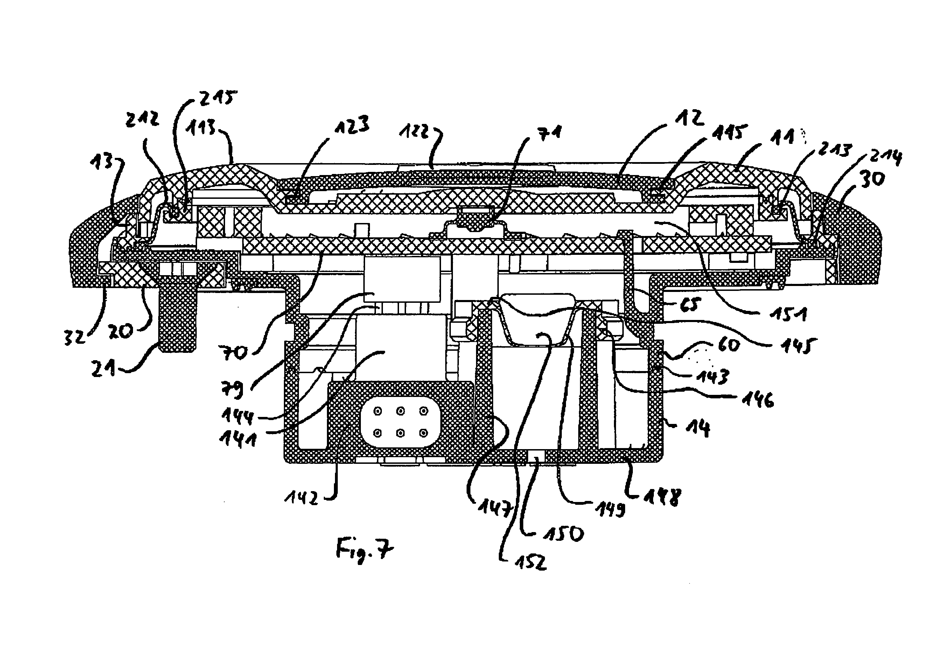

Die Fig. 6 zeigt eine perspektivische Ansicht von oben auf den Deckel 14 eines Türöffnerschalters gemäss einem weiteren Ausführungsbeispiel der Erfindung. Gleiche Merkmale sind in den Zeichnungen mit gleichen Bezugszeichen versehen. Der nach oben offene Deckel 14 hat an seinem oberen Rand einen umlaufenden Verbindungswulst 143, der in eine komplementäre Öffnung in dem Gehäuse 60 eingesetzt wird und zum Beispiel schallgeschweisst wird. Auch eine Rastverbindung ist möglich. In der Fig. 7, die eine Querschnittsansicht durch den zusammengesetzten Türöffnerschalter nach Fig. 6 zeigt, ist diese Verbindung zu erkennen.

Aus der Stiftleiste 141 treten hier 6 Kontaktstifte 144 durch, die in einem an der Leiterplatte 70 befestigten Buchsenleiste 79 elektrisch mit der Leiterplatte 70 verbunden werden.

Ein Unterschied zum Ausführungsbeispiel der Fig. 1 liegt in der Druckausgleichsmembrane 145, die eine Silikonmembrane ist. In dem Boden 148 des Deckels 14 ist eine nach innen gerichtete hohlzylindrische Wand 147 vorgesehen, auf deren freiem Ende der umlaufende Klemmwulst 146 der Druckausgleichsmembrane 145 dichtend aufgesetzt ist. Es wird festgehalten, das hohlzylindrisch keine kreisförmige Wand 147 bedingt. Auch ein hohles Prisma oder eine Ellipse ist ein Hohlzylinder. Die Druckausgleichsmembrane 145 verfügt über eine dünne, elastische Membranwand, die sich insbesondere zwischen den hohlzylindrischen Wänden 147 des Deckels 14 in Richtung einer Druckausgleichsöffnung 150 ausdehnen kann, die sich zentrisch zwischen den Wänden 147 im Boden 148 des Deckels 14 befindet.

Die Funktion ist dabei wie folgt. Die Fig. 7 zeigt die Ruheposition der Druckhaube 11, bei der diese in einem Abstand über der Leiterplatte 70 ist, so dass sich ein Hohlraum 151 zwischen Leiterplatte und Druckhaube ergibt und natürlich weitere Luft enthaltende Räume im ganzen mit dem Deckel 14 dicht abgeschlossenen Gehäuse 60. Druckunterschiede zwischen der Umgebung und diesem inneren Hohlraum 151, die sich durch einen Einsatz des Schalters an Türen von Fahrzeugen im Hochgebirge dadurch ergeben, dass diese über einen Zeitraum von mehreren Minuten bis zu einer Stunde von einer Talstation zu einer Bergstation fahren, können durch Diffusion von Luft durch die Druckausgleichsmembrane 145 ausgeglichen werden. Etwas anderes ist die Betätigung des Schalters, die rasch in Bruchteilen einer Sekunde erfolgt und die Luftsäule ebenfalls verdrängt. Durch die flache Bauweise der Druckhaube mit einer grossen Betätigungsfläche ist trotz dem kurzen Schaltweg eine gewisse Luftmenge zu verdrängen. Diese kann nun durch Öffnungen in der Leiterplatte 70 hindurch in den Bereich der Druckausgleichsmembrane 145 strömen und diese nach unten Richtung Druckausgleichsöffnung 150 hinausdrücken, da über diese Öffnung 150 eine direkte Verbindung zur Umgebung besteht. Dabei bleibt die Dichtigkeit des Schalters gewährleistet. Die aus dem dann nicht mehr bestehenden Hohlraum 151 verdrängte Luftmenge bildet eine Luftsäule in dem dann erweiterten Membranhohlraum 152 zwischen den Wänden 147 des Deckels 14, gehalten durch die Membranwand 149 und abgesichert durch die kleine Öffnung 150, so dass Luft entweichen oder einströmen kann, aber keine physische Verletzung der Membran zu befürchten ist. Die Druckausgleichsmembran 145 kann auch als Membranbalg bezeichnet werden. Sie kann auch eine Balg-förmige Wand (in den Zeichnungen nicht dargestellt) aufweisen. Insbesondere, wenn keine solche den Hohlraum leicht verlängernde Balgwände vorgesehen sind, wird auch eine der Dehnung des Membranmaterials entsprechende zusätzliche Rückstellkraft generiert, wenn der Druck eines Benutzers auf die Druckhaube 11 wieder gelöst wird.

Die Fig. 7 zeigt noch weitere Änderungen Bereich der Druckhaube 11 im Ausführungsbeispiel gegenüber der Fig. 1. Diese Änderungen können auch in Alleinstellung bei einem Ausführungsbeispiel gemäss der Fig. 1 eingesetzt werden und die Ausführungsform der Fig. 1 kann auch nur mit einer Membran 145 nach Fig. 6 eingesetzt werden.

Statt dem kreisförmigen axialen Federelement 112, welches an der Druckhaube 11 vorzugsweise beim Herstellungsprozess befestigt ist, und dass dann mit dem Schweissring 13 auf dem Gehäuse 60 verschweisst wird, kann auch eine durch das Federelement 212 gebildete, in der Draufsicht Kreisring-förmige Federfläche vorgesehen sein, die einen Innenwulst 213 und einen Aussenwulst 214 aufweist. Der Aussenwulst 214 ist ähnlich wie bei der Fig. 1 zwischen Gehäuse 60 und Schweissring 13 in einer Aufnahme eingeklemmt und Gehäuse 60 und Schweissring 13 sind dann vorzugsweise verschweisst. Der Innenwulst 213 ist in einer Aufnahme in einem Zusatzring 215 aufgenommen, wobei auch hier Zusatz-Schweissring 215 und Druckhaube 11 dann vorzugsweise verschweisst sind.

### BEZUGSZEICHENLISTE

| | | | |
|---|---|---|---|
| 10 | Taste | 63 | Lautsprecher |
| 11 | Druckhaube | 64 | trapezförmige |
| 12 | Symboleinsatz | | Befestigungsausnehmung |
| 13 | Schweissring | 65 | Befestigungsrasten |
| 14 | Deckel | 70 | Leiterplatte |
| 15 | Flansch | 71 | Schaltmatte |
| 16 | Schulter | 72 | Lichtleiter |
| 20 | Befestigungsring | 73 | Lautsprecheröffnung |
| 21 | Senkschraube | 74 | trapezförmige |
| 22 | Orientierungsflansch | | Befestigungsausnehmung |
| 23 | angefaste Schraubenöffnung | 75 | Durchbrüche für Schnapper |
| 24 | Bajonettschulter | 76 | innerer Lichtleiter |
| 25 | Verriegelungsnase | 77 | äusserer Lichtleiter |
| 26 | untere Kante | 78 | LED |
| 27 | Rampe | 79 | Buchsenleiste |
| 30 | Supportring | 111 | Durchbruch |
| 31 | Kragen | 112 | axiales Federelement |
| 32 | Bajonettschulter | | (Dichtung) |
| 33 | Zentrierrippen | 113 | Kreisring |
| 34 | Seitenwand | 114 | Vertiefung |
| 35 | Kragen | 115 | Verriegelungsschultern |
| 40 | Stecker | 116 | Aufnahme |
| 41 | Steckerleiste | 121 | Membranfolie |
| 42 | Anschlusskabel | 122 | Symboleinsatz |
| 43 | Schnapplasche | 123 | Bajonettschultern |
| 50 | Paneel | 131 | Orientierungsnase |
| 51 | Gehäuseaufnahme | 141 | Stiftleiste |
| 52 | Schraubenloch | 142 | Steckeraufnahme |
| 60 | Gehäuse | 143 | Verbindungswulst |
| 61 | Lautsprecherpodest | 144 | Kontaktstifte |
| 62 | Schaumstoffpuffer | 145 | Druckausgleichsmembrane |
| 146 | Klemmwulst | 173 | leitende Schaltfläche |
| 147 | Wand | 174 | seitlicher Ansatz |
| 148 | Boden | 175 | Befestigungsfuss |
| 149 | Membranwand | 176 | Vertiefung |
| 150 | Druckausgleichsöffnung | 212 | Federelement |
| 151 | Hohlraum | 213 | Innenwulst |
| 152 | Membranhohlraum | 214 | Aussenwulst |
| 171 | zentrale Schaltmattenerhebung | 215 | Zwischenring |
| 172 | Grundfläche | | |

## Patentansprüche

1. Einbauschalter, insbesondere Türöffnerschalter, zur Montage auf einer Befestigungsfläche (50) mit einem rohrförmigen Gehäuse (14, 60) und einem, aus der Benutzungsrichtung des Einbauschalters gesehen, über das Gehäuse (14, 60) überstehenden Flansch (15) mit einer axial beweglichen Taste (10, 11) zur Betätigung eines mit dem Gehäuse (14, 60) verbundenen Schaltorgans (71), wobei die Taste (10, 11) durch eine Rückstellkraft in ihrer Ruhelage gehalten und gegen die Wirkung dieser Rückstellkraft eindrückbar ist, **dadurch gekennzeichnet, dass** ein Befestigungsring (20) vorgesehen ist, mit dem der Einbauschalter auf der Befestigungsfläche (50) fixierbar ist, dass der Flansch (15) des Deckels (14, 60) den Befestigungsring (20) vollständig überdeckt, und dass ein Abdeckring (30) vorgesehen ist, mit dem der Deckel (14) des Gehäuses mit dem Befestigungsring (20) verriegelbar ist.

2. Schalter nach Anspruch 1, **dadurch gekennzeichnet, dass** die Taste (10) des Einbauschalters die Fläche des Flansches (15) derart ausfüllt, dass sie die Verbindungsflächen des Befestigungsringes (20) mit der Befestigungsfläche (50) abdeckt.

3. Schalter nach Anspruch 1 oder 2, **dadurch gekennzeichnet, dass** der Befestigungsring (20) über mindestens einen zum Gehäuse (60) komplementären (64) Orientierungsflansch (22) verfügt.

4. Schalter nach einem der Ansprüche 1 bis 3, **dadurch gekennzeichnet, dass** der Befestigungsring (20) und der Abdeckring (30) über mindestens einen, vorzugsweise mindestens drei, komplementäre Verriegelungsbereiche (25, bzw. 32) verfügen.

5. Schalter nach dem Oberbegriff des Anspruchs 1 oder nach einem der Ansprüche 1 bis 4, **dadurch gekennzeichnet, dass** die Taste (10) eine Druckhaube (11) aufweist, die mit dem Gehäuse (60) axial federnd dicht, insbesondere wasserdicht, verbunden ist, und dass an der Unterseite (14) des Gehäuses (60) ein Membranbalg (145; 149) gegenüber der Umgebung vorgesehen ist.

6. Schalter nach Anspruch 5, **dadurch gekennzeichnet, dass** zwischen der Druckhaube (11) und dem Membranbalg (145, 149) eine Leiterplatte (70) des Einbauschalters vorgesehen ist, und dass die Leiterplatte (70) mit Durchbrüchen für den Druckausgleich versehen ist.

7. Schalter nach Anspruch 5 oder 6, **dadurch gekennzeichnet, dass** die Druckhaube (11) über vorzugsweise zentral angeordnete Akustikdurchbrüche (111) und ferner vorzugsweise über eine auf der Druckhaube (11) dichtend aufgebrachte Membran (121) verfügt.

8. Schalter nach einem der Ansprüche 5 bis 7, **dadurch gekennzeichnet, dass** der Membranbalg (145, 149) auf einem in das Innere des Schalters ragenden Hohlzylinder (147) dicht aufgesetzt ist und der Membranhohlraum (152) zwischen den Wänden des Hohlzylinders (147) ausgebildet ist.

9. Schalter nach Anspruch 8, **dadurch gekennzeichnet, dass** der Hohlzylinder (147) gegenüber der Umgebung mit dem Boden (148) des Deckels (14) abgeschlossen ist und in diesem Boden eine Druckausgleichsöffnung (150) vorgesehen ist.

10. Schalter nach Anspruch 8 oder 9, **dadurch gekennzeichnet, dass** der Hohlzylinder (147) im wesentlichen mindestens ein Volumen aufweist, welches dem bei Betätigung der Druckhaube (11) durch dessen Bewegung in den Innenraum des Schalters verdrängten Hohlraum-Volumen (151) entspricht.

11. Schalter nach einem der Ansprüche 5 bis 10, **dadurch gekennzeichnet, dass** das Material der Membran (145) Silikon ist.

12. Schalter nach einem der Ansprüche 1 bis 11, **dadurch gekennzeichnet, dass** die Druckhaube (11) über einen federnden, insbesondere über einen 2K-gespritzten federnden Rand (12) verfügt, der mit dem Gehäuse (60) dicht, insbesondere über einen Schweissring (113), verbunden ist.

13. Schalter nach einem der Ansprüche 1 bis 11, **dadurch gekennzeichnet, dass** ein federnder Kreisring (212) vorgesehen ist, der einerseits mit der Druckhaube (11) dicht, insbesondere über einen zweiten Schweissring (215), verbunden ist und der andererseits mit dem Gehäuse (60) dicht, insbesondere über einen ersten Schweissring (113), verbunden ist.

14. Schalter nach einem der Ansprüche 1 bis 13, **dadurch gekennzeichnet, dass** die Druckhaube (11) über eine mittige Vertiefung (114) verfügt, in der zentral gegenüber der innen liegenden Leiterplatte (70) eine Schaltmatte (71) vorgesehen ist, mit der bei an irgendeinem Punkt der Druckhaube (11) niedergedrückter Druckhaube (11) ein Schaltkontakt auf der Leiterplatte (70) schliessbar ist.

15. Schalter nach einem der Ansprüche 1 bis 14, **dadurch gekennzeichnet, dass** der Deckel über eine Steckerbuchse (142) für einen separaten Versorgungs- und Signal-Stecker (40) verfügt.

## Claims

1. A flush-mounted switch, in particular a door-opener switch, for mounting on a fastening surface (50), having a tubular housing (14, 60) and a flange (15) which protrudes over the housing (14, 60), as seen from the direction of use of the flush-mounted switch, and has an axially moveable button (10, 11) for actuating a switching member (71) connected to the housing (14, 60), which button (10, 11) is held in its rest position by a restoring force and can be pushed in counter to the action of this restoring force, **characterized in that** there is provided a fastening ring (20), by way of which the flush-mounted switch is fixable on the fastening surface (50), **in that** the flange (15) of the cover (14, 60) completely covers the fastening ring (20), and **in that** there is provided a covering ring (30), by way of which the cover (14) of the housing is lockable to the fastening ring (20).

2. The switch as claimed in claim 1, wherein the button (10) of the flush-mounted switch fills the surface area of the flange (15) such that it covers the connecting surfaces of the fastening ring (20) to the fastening surface (50).

3. The switch as claimed in claim 1 or 2, wherein the fastening ring (20) has at least one orientation flange (22) complementary (64) to the housing (60).

4. The switch as claimed in one of claims 1 to 3, wherein the fastening ring (20) and the covering ring (30) have at least one, preferably at least three, complementary locking regions (25 and 32, respectively).

5. The switch according to the preamble of claim 1 or as claimed in one of claims 1 to 4, wherein the button (10) has a push cap (11) which is connected to the housing (60) in an axially resilient and sealed, in particular watertight, manner, and wherein on the underside (14) of the housing (60) there is provided a diaphragm bellows (145; 149) with respect to the environment.

6. The switch as claimed in claim 5, wherein a circuit board (70) of the flush-mounted switch is provided between the push cap (11) and the diaphragm bellows (145, 149), and wherein the circuit board (70) is provided with cutouts for pressure equalization.

7. The switch as claimed in claim 5 or 6, wherein the push cap (11) has preferably centrally arranged acoustic cutouts (111) and furthermore preferably has a diaphragm (121) applied in a sealing manner to the push cap (11).

8. The switch as claimed in one of claims 5 to 7, wherein the diaphragm bellows (145, 149) is placed in a sealed manner on a hollow cylinder (147) that projects into the interior of the switch and the diaphragm cavity (152) is formed between the walls of the hollow cylinder (147).

9. The switch as claimed in claim 8, wherein the hollow cylinder (147) is closed off from the environment by the base (148) of the cover (14) and a pressure equalization opening (150) is provided in this base.

10. The switch as claimed in claim 8 or 9, wherein the hollow cylinder (147) has substantially at least one volume, which corresponds to the cavity volume (151) displaced during the actuation of the push cap (11) by the movement thereof into the interior of the switch.

11. The switch as claimed in one of claims 5 to 10, wherein the material of the diaphragm (145) is silicone.

12. The switch as claimed in one of claims 1 to 11, wherein the push cap (11) has a resilient rim (12), in particular a two-component injection molded resilient rim (12), which is connected to the housing (60) in a sealed manner, in particular via a welding ring (113).

13. The switch as claimed in one of claims 1 to 11, wherein there is provided a resilient circular ring (212) which is connected on one side to the push cap (11) in a sealed manner, in particular via a second welding ring (215), and which is connected on the other side to the housing (60) in a sealed manner, in particular via a first welding ring (113).

14. The switch as claimed in one of claims 1 to 13, wherein the push cap (11) has a central depression (114), in which a switching mat (71) is provided centrally with respect to the internal circuit board (70), it being possible by way of said switching mat (71) for a switching contact on the circuit board (70) to be closed with the push cap (11) pressed down at any point on the push cap (11).

15. The switch as claimed in one of claims 1 to 14, wherein the cover has a plug socket (142) for a separate supply and signal plug (40).

## Revendications

1. Interrupteur encastré, en particulier interrupteur d'ouverture de porte, pour le montage sur une surface de fixation (50) avec un boîtier tubulaire (14, 60) et une bride (15) faisant saillie au-delà du boîtier (14, 60), vu depuis la direction d'utilisation de l'interrupteur encastré, avec une touche (10, 11) déplaçable axialement pour l'actionnement d'un organe de commutation (71) connecté au boîtier (14, 60), la touche (10, 11) étant maintenue par une force de rappel dans sa position de repos et pouvant être pressée à l'encontre de l'action de cette force de rappel, **caractérisé en ce qu'**il est prévu une bague de fixation (20) avec laquelle l'interrupteur encastré peut être fixé sur la surface de fixation (50), **en ce que** la bride (15) du couvercle (14, 60) recouvre complètement la bague de fixation (20), et **en ce qu'**une bague de recouvrement (30) est prévue, avec laquelle le couvercle (14) du boîtier peut être verrouillé à la bague de fixation (20).

2. Interrupteur selon la revendication 1, **caractérisé en ce que** la touche (10) de l'interrupteur encastré occupe la surface de la bride (15) de telle sorte qu'elle recouvre les surfaces de connexion de la bague de fixation (20) avec la surface de fixation (50).

3. Interrupteur selon la revendication 1 ou 2, **caractérisé en ce que** la bague de fixation (20) dispose d'au moins une bride d'orientation (22) complémentaire (64) du boîtier (60).

4. Interrupteur selon l'une quelconque des revendications 1 à 3, **caractérisé en ce que** la bague de fixation (20) et la bague de recouvrement (30) disposent d'au moins une, de préférence d'au moins 3, régions de verrouillage complémentaires (25, respectivement 32).

5. Interrupteur selon le préambule de la revendication 1 ou selon l'une quelconque des revendications 1 à 4, **caractérisé en ce que** la touche (10) présente un capot de pression (11), qui est connecté au boîtier (60) de manière étanche, en particulier étanche à l'eau, avec un effet de ressort axial, et **en ce qu'**un soufflet à membrane (145 ; 149) vis-à-vis de l'environnement est prévu sur le côté inférieur (14) du boîtier (60).

6. Interrupteur selon la revendication 5, **caractérisé en ce qu'**entre le capot de pression (11) et le soufflet à membrane (145, 149) est prévue une carte à circuits imprimés (70) de l'interrupteur encastré, et **en ce que** la carte à circuits imprimés (70) est pourvue d'orifices pour l'équilibrage de la pression.

7. Interrupteur selon la revendication 5 ou 6, **caractérisé en ce que** le capot de pression (11) dispose d'orifices acoustiques (111) disposés de préférence centralement et dispose en outre de préférence d'une membrane appliquée de manière hermétique sur le capot de pression (11).

8. Interrupteur selon l'une quelconque des revendications 5 à 7, **caractérisé en ce que** le soufflet à membrane (145, 149) est placé hermétiquement sur un cylindre creux (147) faisant saillie à l'intérieur de l'interrupteur et la cavité de la membrane (152) est réalisée entre les parois du cylindre creux (147).

9. Interrupteur selon la revendication 8, **caractérisé en ce que** le cylindre creux (147) est fermé vis-à-vis de l'environnement avec le fond (148) du couvercle (14) et une ouverture d'équilibrage de la pression (150) est prévue dans ce fond.

10. Interrupteur selon la revendication 8 ou 9, **caractérisé en ce que** le cylindre creux (147) présente essentiellement au moins un volume qui correspond au volume (151) de la cavité déplacé par son déplacement dans l'espace interne de l'interrupteur lors de l'actionnement du capot de pression (11).

11. Interrupteur selon l'une quelconque des revendications 5 à 10, **caractérisé en ce que** le matériau de la membrane (145) est de la silicone.

12. Interrupteur selon l'une quelconque des revendications 1 à 11, **caractérisé en ce que** le capot de pression (11) dispose d'un bord (12) élastique, en particulier d'un bord élastique pulvérisé avec deux composants, qui est connecté au boîtier (60) de manière hermétique, en particulier par le biais d'une bague soudée (113).

13. Interrupteur selon l'une quelconque des revendications 1 à 11, **caractérisé en ce qu'**une bague circulaire élastique (212) est prévue, laquelle est connectée d'une part au capot de pression (11) de manière hermétique, notamment par le biais d'une deuxième bague soudée (215), et est connectée d'autre part au boîtier (60) de manière hermétique, en particulier par le biais d'une première bague soudée (113).

14. Interrupteur selon l'une quelconque des revendications 1 à 13, **caractérisé en ce que** le capot de pression (11) dispose d'un renfoncement central (114), dans lequel est prévue centralement par rapport à la carte à circuits imprimés (70) située à l'intérieur, une natte de commutation (71), avec laquelle un contact de commutation sur la carte à circuits imprimés (70) peut être fermé lorsque le capot de pression (11) est pressé vers le bas en un point quelconque du capot de pression (11).

15. Interrupteur selon l'une quelconque des revendications 1 à 14, **caractérisé en ce que** le couvercle dispose d'une douille enfichable (142) pour un connecteur enfichable pour alimentation et signaux (40) séparé.
